# EUROPÄISCHE PATENTANMELDUNG

(11) **EP 4 851 024 A1**
(43) Veröffentlichungstag der Anmeldung: **09.12.2026**
(21) Anmeldenummer: 26177558.9
(22) Anmeldetag: 08.05.2026
(51) Int. Cl.: B62D 55/26, B62D 55/04, B62D 55/20

(54) **TRAKTIONSBAND, INSBESONDERE BOGIEBAND**

(30) Priorität: 03.06.2025 DE 202025103091 U
(71) Anmelder: IMPEX Forstmaschinen GmbH, 94327 Bogen / Furth (DE)
(72) Erfinder: Gaillinger, Hermann, 84069 Schierling (DE)
(74) Vertreter: advotec.

(57) **Zusammenfassung**

Die Erfindung betrifft Traktionsband, insbesondere als Endlosband ausgebildetes Bogieband (1) zur Anordnung an Reifen (2a, 2b) von Fahrzeugen, insbesondere Forstfahrzeugen, umfassend eine Innenseite (3), welche im montierten Zustand des Traktionsbandes (1) den Fahrzeugreifen (2a, 2b) zugewandt ist, und eine Außenseite (4), welche im montierten Zustand des Traktionsbandes (1) den Fahrzeugreifen (2a, 2b) abgewandt ist, dadurch gekennzeichnet, dass an der Außenseite (4) des Traktionsbandes (1) mindestens zwei, sich gegenüberstehende Profilklötze (5) angeordnet sind, zwischen denen mindestens eine Profilleiste (6) angeordnet ist.

## Beschreibung

Die vorliegende Erfindung betrifft ein Traktionsband, insbesondere ein als Endlosband ausgebildetes Bogieband, zur Anordnung an Reifen von Fahrzeugen, insbesondere Forstfahrzeugen, umfassend eine Innenseite, welche im montierten Zustand des Traktionsbandes den Fahrzeugreifen zugewandt ist, und eine Außenseite, welche im montierten Zustand des Traktionsbandes den Fahrzeugreifen abgewandt ist.

Derartige, auch als Tragbänder bezeichnete Traktionsbänder sind aus dem Stand der Technik bekannt. Diese Traktionsbänder werden um die üblicherweise zwei bis drei hintereinander angeordneten Räder eines Fahrzeuges, wie beispielsweise Forstfahrzeuge, herum angeordnet. Die Reifen sind üblicherweise Gummiluftreifen. Ein derartiges Traktionsband in Form eines Bogiebandes mit einem entsprechenden Landfahrzeug für die Forstwirtschaft ist zum Beispiel aus der EP 2 195 228 B1 sowie aus der DE 10 2016 010 553 A1 bekannt. Diese Traktionsbänder erhöhen die Tragfähigkeit auf Weichböden indem sie die Aufstandsfläche auf dem Boden vergrößern. Mittels dieser Traktionsbänder kann die Anzahl an Reifen am Forstfahrzeug gering gehalten werden. Ferner kann mittels dieser Bänder eine Punktbelastung des Untergrunds verringert werden.

Ein Nachteil der aus dem Stand der Technik bekannten Traktionsbänder besteht u.a. in einer mangelnden Standfestigkeit gerade in steilem Gelände. Auch lässt die Haftung auf weichem Boden oftmals zu wünschen übrig, was dazu führt, dass die Traktionsbänder auf nassem oder weichem Untergrund bei einem zu schnellen Anfahren "durchdrehen".

Der vorliegenden Erfindung liegt die Aufgabe zu Grunde, die Nachteil der aus dem Stand der Technik bekannten Traktionsbänder zu überwinden. Der vorliegenden Erfindung liegt insbesondere die Aufgabe zu Grunde, ein Traktionsband der eingangs genannten Art zur Verfügung zu stellen, welches eine verbesserte Haftung und Standfestigkeit insbesondere auf weichem und/oder steilem Gelände ermöglicht.

Diese Aufgabe wird erfindungsgemäß durch ein Traktionsband, insbesondere Bogieband, der eingangs genannten Art gelöst, welches dadurch gekennzeichnet ist, dass an der Außenseite des Traktionsbandes mindestens zwei, sich gegenüberstehende Profilklötze angeordnet sind, zwischen denen mindestens eine Profilleiste angeordnet ist.

So hat sich bei Feldversuchen herausgestellt, dass gerade die erfindungsgemäße Kombination aus zwei sich gegenüberstehenden Profilklötzen, zwischen denen mindestens eine Profilleiste angeordnet ist, eine besonders gute Haftung und Standfestigkeit auf weichem und/oder steilem Gelände bewirkt.

Mit Vorteil stehen sich die Profilklötze quer zu einer Laufrichtung A gegenüber. Diese Anordnung der Profilklötze bewirkt eine besonders gute Haftung auf weichem und/oder steilem Gelände.

Bei einer besonders bevorzugten Ausführungsform des erfindungsgemäßen Traktionsbandes verbindet die mindestens eine Profilleiste die sich gegenüberstehenden Profilklötze miteinander und bildet mit diesen ein Profilelement, wobei die Profilklötze vorzugsweise einstückig mit der Profilleiste verbunden sind. Diese Ausführungsform erhöht die Standfestigkeit auf steilem Gelände in besonderem Maße.

Bei einer besonders bevorzugten Ausführungsform des erfindungsgemäßen Traktionsbandes ist eine Vielzahl von Paaren sich gegenüberstehenden Profilklötzen, insbesondere eine Vielzahl von Profilelementen vorgesehen. Dies erhöht die Haftung des erfindungsgemäßen Traktionsbandes auf weichem und/oder steilem Untergrund enorm.

Bei einer besonders bevorzugten Ausführungsform des erfindungsgemäßen Traktionsbandes weisen die Profilklötze eine größere Höhe h als die Profilleisten auf, so dass die Profilklötze eines Profilelementes die mindestens eine Profilleiste des Profilelementes überragen. Dadurch wird eine weitere Steigerung der Standfestigkeit und Haftung auf weichem und/oder steilem Gelände bewirkt.

So kommt es bei dieser Ausführungsform beim Fahren zunächst zu einem Eindrücken der Profilklötze in den Untergrund, was zu einer ersten Erhöhung der Haftung und Standfestigkeit führt. Befinden sich dann die einzelnen Profilklötze so weit im Untergrund, dass sich der die Profilleisten überragende Abschnitt der Profilklötze komplett im Erdboden befindet, werden auch die Profilleisten der Profilelemente in den Erdboden gedrückt, so dass eine weitere Steigerung der Haftung erreicht wird. Bei eher härterem Untergrund werden die die Profilleisten überragenden Abschnitte der Profilklötze in der Regel nicht komplett in den Erdboden gedrückt, so dass sich auch die Profilleisten noch oberhalb des Erdbodens befinden. Dadurch wird erreicht, dass ein mit erfindungsgemäßen Traktionsbändern versehenes Fahrzeug optimal auf solchem Gelände verfahren werden kann, ohne eine zu starke Verbindung mit einem solchen Untergrund einzugehen. Erst wenn das Gelände steil oder weicher wird, werden die Profilelemente so weit in den Erdboden gedrückt, dass auch die Profilleisten ganz oder teilweise in den Erdboden gedrückt werden und so einen optimalen Halt bieten.

Mit Vorteil sind die Profilklötze quaderförmig und die mindestens eine Profilleiste ist vorzugsweise als längliche Platte ausgebildet. Eine derartige Form der Profilklötze und Profilleisten hat sich als besonders effektiv für die oben genannten Ziele erwiesen. Zudem sind derartige Formen besonders einfach und kostengünstig herstellbar.

Mit Vorteil ist das erfindungsgemäße Traktionsband durch eine Vielzahl von gelenkig miteinander verbundenen Bandsegmenten gekennzeichnet, wobei vorzugsweise jedes Bandsegment ein Profilelement aufweist. Eine derartige Ausführungsform hat sich als besonders einfach bei der Herstellung erwiesen.

In der Regel sind die Bandsegmente als längliche Platten ausgebildet, wobei vorzugsweise im Bereich einer Längsseite eines Bandsegments eine parallel zu der Längsseite angeordnete Abkantung in Richtung der Innenseite des Traktionsbandes vorgesehen ist. Durch diese in Richtung der Innenseite verlaufende Abkantung wird verhindert, dass sich die einzelnen Bandsegmente beim Abrollvorgang verkeilen. Dadurch wird ein reibungsloser Abrollvorgang beim Einsatz des erfindungsgemäßen Traktionsbandes erreicht. Vorzugsweise ist eine weitere, im Bereich der anderen Längsseite des Bandsegments parallel zu dieser angeordnete Abkantung in Richtung der Außenseite des Traktionsbandes vorgesehen. Dies trägt zu einem noch besseren Zusammenspiel zwischen den einzelnen Bandsegmenten bei.

Die einzelnen Bandsegmente können über Verbindungsseile oder ähnliche Verbindungsmittel miteinander verbunden sein.

In der Regel ist das erfindungsgemäße Traktionsband aus Metall, vorzugsweise Stahl, gefertigt. Dieses Material hat sich als besonders robust und Effektiv bei der Lösung der oben genannten Aufgaben erwiesen.

Die vorliegende Erfindung betrifft ferner ein Fahrzeug, insbesondere Forstfahrzeug, umfassend mindestens vier Reifen und mindestens zwei erfindungsgemäße Traktionsbänder.

Beim erfindungsgemäßen Fahrzeug umspannt ein Traktionsband vorzugsweise mindestens zwei hintereinander angeordnete Reifen des Fahrzeuges.

Weitere Merkmale der Erfindung ergeben sich aus der nachfolgenden Beschreibung von bevorzugten Ausführungsbeispielen der Erfindung in Verbindung mit den Zeichnungen und den Unteransprüchen. Hierbei können die einzelnen Merkmale für sich allein oder in Kombination miteinander verwirklicht sein.

In den Zeichnungen zeigen:
- Figur 1:: eine perspektivische Darstellung eines erfindungsgemäßen Bogiebands, welches zwei Reifen eines erfindungsgemäßen Fahrzeuges umspannt;
- Figur 2:: eine perspektivische Darstellung eines Bandsegments des Bogiebandes gemäß Figur 1;

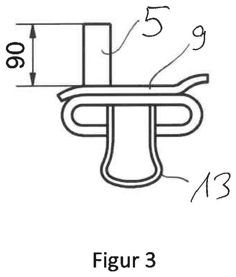

- Figur 3:: eine Seitenansicht des Bandsegments gemäß Fig. 2.

Nachfolgend werden gleiche oder funktionsgleiche Elemente mit den gleichen Bezugsziffern gekennzeichnet.

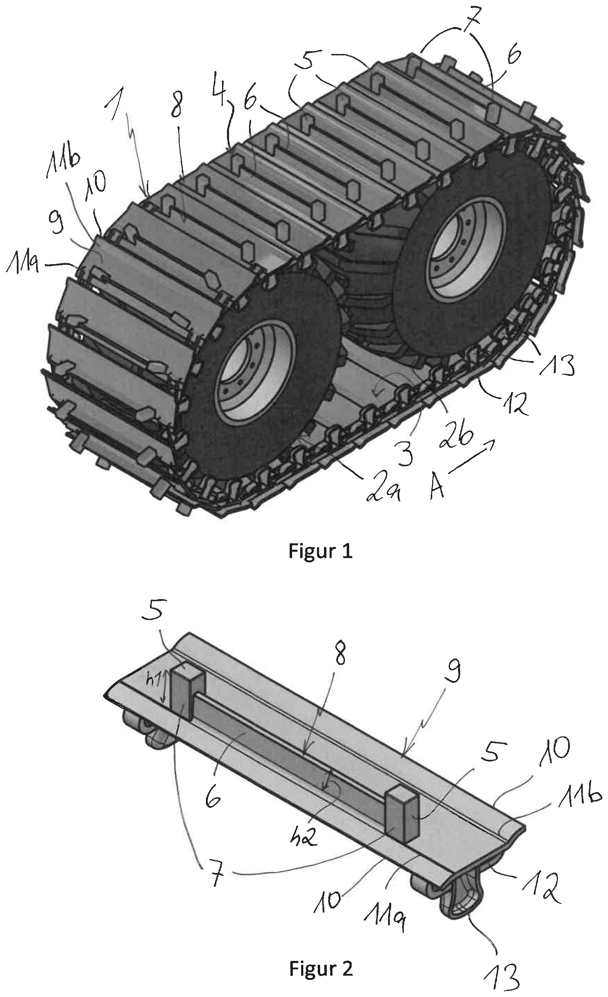

Figur 1 zeigt ein erfindungsgemäßes Bogieband 1, welches an zwei hintereinander angeordneten Reifen 2a, 2b angeordnet ist. Die Reifen 2a und 2b gehören zu einem (hier nicht dargestellten) Forstfahrzeug.

Die beiden Reifen 2a und 2b laufen hintereinander in der gleichen Spur. Bei den Reifen 2a und 2b handelt es sich um Gummireifen mit Luftfüllung. Die beiden Reifen 2a, 2b sind angetriebene Reifen, also jeweils über Antriebe wie Zahnräder, Ketten oder andere mechanische Getriebe oder Hydraulikantriebe mit der Fahrantriebskraftquelle des Fahrzeugs gekoppelt und nicht allein durch das Bogieband 1 mitgedreht. Ein Vorteil dieser Lösung besteht darin, dass bei geringen Anforderungen an die Tragfähigkeit ohne Nachteile auch ohne Bogiebänder gefahren werden kann.

Das Bogieband 1 ist in Umfangsrichtung bzw. in einer Laufrichtung A des Fahrzeugs endlos schließbar. Das Bogieband 1 umfasst eine Innenseite 3, welche im montierten Zustand des Bogiebandes 1 den Fahrzeugreifen 2a, 2b zugewandt ist. Das Bogieband 1 umfasst ferner eine Außenseite 4, welche im montierten Zustand des Bogiebandes 1 den Fahrzeugreifen 2a, 2b abgewandt und dem Erdboden zugewandt ist.

An der Außenseite 4 des Bogiebandes 1 sind eine Vielzahl von Profilklötzen 5 angeordnet, wobei die Profilklötze 5 paarweise angeordnet sind. Die paarweise angeordneten Profilklötze 5 stehen sich jeweils quer zur Laufrichtung A gegenüber. Zwischen jedem Paar 7 Profilklötze ist eine Profilleiste 6 angeordnet. Jedes Profilklotzpaar 7 bildet mit einer Profilleiste 6 ein Profilelement 8.

Das Bogieband 1 umfasst eine Vielzahl von gelenkig miteinander verbundenen Bandsegmenten 9, wobei jedes Bandsegment 9 ein Profilelement 8 aufweist. Figur 2 zeigt eines der Bandsegmente 9 mit einem Profilelement 8, welches zwei sich gegenüberstehende und ein Profilklotzpaar 7 bildende Profilklötze 5 trägt. Zwischen den Profilklötzen 5 ist eine Profilleiste 6 vorgesehen. Die Profilleiste 6 verbindet die beiden, ein Paar 7 bildende Profilklötze 5 miteinander und ist mit diesen im vorliegenden Ausführungsbeispiel einstückig verbunden. Bei dieser Ausführungsform lassen sich die einzelnen Profilelemente 8 besonders einfach und kostengünstig herstellen.

Wie in der Figur 2 ebenfalls gut zu erkennen ist, weisen die Profilklötze 5 eine größere Höhe h1 als die Profilleisten 6 auf, so dass die Profilklötze 5 eines Profilelements 8 die Profilleisten 6 der Profilelemente 8 überragen. Durch diese unterschiedlichen Höhen zwischen den Profilklötzen 5 (h1) und den Profilleisten 6 (h2) lassen sich die oben genannten Vorteile erzielen. Insbesondere wird durch eine solche Ausführungsform eine hervorragende Standfestigkeit auch auf steilem Gelände sowie allgemein eine gute Haftung auch auf weichem Boden erreicht. Zudem ist auch die Haftung auf hartem Boden optimiert.

In der vorliegenden Ausführungsform sind die Profilklötze 5 quaderförmig und die Profilleisten 6 als längliche Platten ausgebildet. Dadurch wird eine besonders gute Bodenhaftung des Forstfahrzeuges auch bei ungünstigen Bodenverhältnissen erreicht.

Die einzelnen Bandsegmente 9 sind als längliche Platten ausgebildet. In kurzer Distanz zu den beiden Längsseiten 10 eines Bandsegments 9 ist jeweils eine Abkantung 11a, 11b vorgesehen. Eine Abkantung 11a ist in Richtung der Reifen 2a, 2b verlaufend ausgebildet. Die zweite Abkantung 11b verläuft in die entgegengesetzte Richtung, also von den Rädern 2a, 2b weg.

Im Bereich der beiden Schmalseiten 12 eines Bandsegments 9 sind Führungselemente 13 vorgesehen, welche die Stirnseiten der Reifen 2a, 2b tangieren und zu einem festen Sitz des Bogiebands 1 auf den Rädern 2a, 2b beitragen.

Wie in der Figur 1 gut zu sehen ist, überragt das Bogieband 1 die Reifen 2a, 2b auf beiden Seiten etwas. Im Zusammenwirken mit den Führungselementen 13 bewirkt dies einen besonders guten Sitz des Bogiebands 11 auf den Reifen 2a und 2b.

Das Bogieband 1 ist im vorliegenden Ausführungsbeispiel aus Stahl gefertigt.

## Patentansprüche

1. Traktionsband, insbesondere als Endlosband ausgebildetes Bogieband (1) zur Anordnung an Reifen (2a, 2b) von Fahrzeugen, insbesondere Forstfahrzeugen, umfassend eine Innenseite (3), welche im montierten Zustand des Traktionsbandes (1) den Fahrzeugreifen (2a, 2b) zugewandt ist, und eine Außenseite (4), welche im montierten Zustand des Traktionsbandes (1) den Fahrzeugreifen (2a, 2b) abgewandt ist, **dadurch gekennzeichnet, dass** an der Außenseite (4) des Traktionsbandes (1) mindestens zwei, sich gegenüberstehende Profilklötze (5) angeordnet sind, zwischen denen mindestens eine Profilleiste (6) angeordnet ist.

2. Traktionsband nach Anspruch 1, **dadurch gekennzeichnet, dass** sich die Profilklötze (5) quer zu einer Laufrichtung A des Traktionsbandes (1) gegenüberstehen.

3. Traktionsband nach einem der Ansprüche 1 oder 2, **dadurch gekennzeichnet, dass** die mindestens eine Profilleiste (6) die sich gegenüberstehenden Profilklötze (5) miteinander verbindet und mit diesen ein Profilelement (8) bildet, wobei die Profilklötze (5) vorzugsweise einstückig mit der Profilleiste (6) verbunden sind.

4. Traktionsband nach einem der vorhergehenden Ansprüche, insbesondere nach Anspruch 3, **dadurch gekennzeichnet, dass** eine Vielzahl von Paaren (7) sich gegenüberstehender Profilklötze (5), insbesondere eine Vielzahl von Profilelementen (8) vorgesehen ist.

5. Traktionsband nach einem der vorhergehenden Ansprüche, insbesondere nach Anspruch 3, **dadurch gekennzeichnet, dass** die Profilklötze (5) eine größere Höhe h als die Profilleisten aufweisen, so dass die Profilklötze (5) eines Profilelements (8) die mindestens eine Profilleiste (6) des Profilelements (8) überragen.

6. Traktionsband nach einem der vorhergehenden Ansprüche, **dadurch gekennzeichnet, dass** die Profilklötze (5) quaderförmig ausgebildet sind und die mindestens eine Profilleiste (6) vorzugsweise als längliche Platte ausgebildet ist.

7. Traktionsband nach einem der vorhergehenden Ansprüche, insbesondere nach Anspruch 3, **gekennzeichnet durch** eine Vielzahl von gelenkig miteinander verbundenen Bandsegmenten (9), wobei vorzugsweise jedes Bandsegment (9) ein Profilelement (8) aufweist.

8. Traktionsband nach Anspruch 7, **dadurch gekennzeichnet, dass** die Bandsegmente (9) als längliche Platten ausgebildet sind, wobei vorzugsweise zwei, parallel zu den Längsseiten (10) eines Bandsegments angeordneten Abkantungen (11a, 11b) vorgesehen sind, wobei eine Abkantung (11a) in Richtung der Innenseite (3) orientiert und eine Abkantung (11b) vorzugsweise in Richtung der Außenseite (4) des Bogiebandes (1) orientiert ausgebildet ist.

9. Traktionsband nach einem der vorhergehenden Ansprüche, **dadurch gekennzeichnet, dass** es aus Metall, vorzugsweise Stahl, gefertigt ist.

10. Fahrzeug, insbesondere Forstfahrzeug, umfassend mindestens vier Reifen (2a, 2b) und mindestens zwei Traktionsbänder (1) nach einem der Ansprüche 1 bis 9.

11. Fahrzeug nach Anspruch 10, **dadurch gekennzeichnet, dass** ein Traktionsband (1) mindestens zwei hintereinander angeordnete Reifen (2a, 2b) des Fahrzeugs umspannt.
